# EUROPEAN PATENT APPLICATION

(11) **EP 3 418 791 A1**
(43) Date of publication of application: **26.12.2018**
(21) Application number: 18176315.2
(22) Date of filing: 06.06.2018
(51) Int. Cl.: G02B 27/01

(54) **MONO-EYE HEAD-UP DISPLAY**

(30) Priority: 20.06.2017 US 201715628244
(71) Applicant: Visteon Global Technologies, Inc., Van Buren Township, MI 48111-5711 (US)
(72) Inventor: Chauveau, Benoit, Van Buren Township, MI Michigan 48111 (US)
(74) Representative: Dummett Copp LLP

(57) **Abstract**

Disclosed herein are systems, methods, and devices for implementing a mono-eye head-up display (HUD), being capable of producing content for only one eye of a viewer of a combiner of the HUD, the eye chosen being adjustable. The aspects disclosed herein accomplish this through disclosing structures and methods for implementing a backlighting portion of the HUD.

## Description

### BACKGROUND

Displays are employed to convey digital information via a lighted platform. The displays are installed in a variety of contexts and environments, such as televisions, advertisements, personal computing devices, and more commonly in recent times, in vehicles.

The standard display assembly includes display driving logic with various instructions as to the patterns to communicate to an array of lighting elements. The display driving logic communicates signals that instruct which of the lighting elements to light up, and a corresponding intensity and color (if available). The display assembly may be incorporated with various interface devices, such as keyboards, pointers, gaze trackers, head trackers, eye trackers, touch screens, and the like.

The displays are usually cased with transparent substances, such as lenses, that allow light being illuminated to be projected to the viewer's eyes. A surface of the lens faces the viewer of the display, and thus, implementers provide different shapes, sizes, and types based on an implementers preference. Further, different locations and such may necessitate the lens to be a specific type and shape.

In recent years, displays in vehicles have been employed using a head-up display (HUD). A HUD is a display intended to be in front of a viewer (for example, the windscreen area of a vehicle), that allows the viewer to see content on the windscreen and still see the area on the other side of a transparent glass.

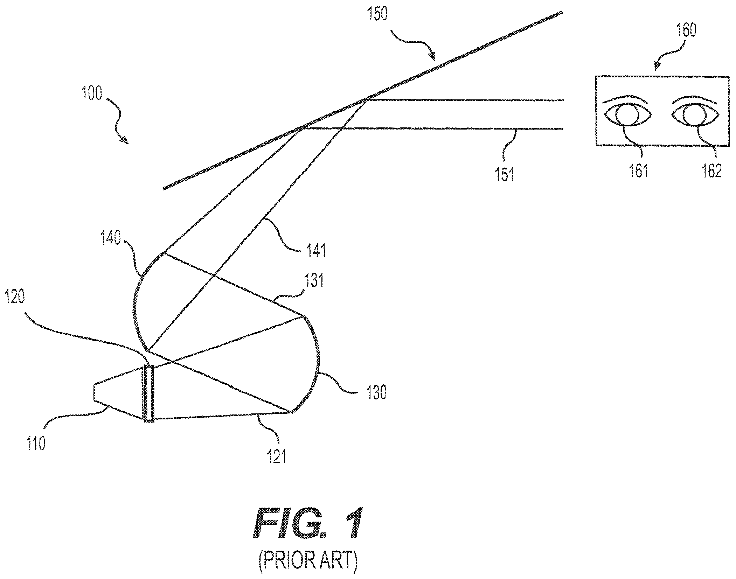

FIG. 1 illustrates a prior art implementation of a HUD 100. As shown, the HUD has a thin film transistor display (TFT) 120 with a backlight 110 that projects information onto the windscreen 150 (i.e. a front window). Light 121 is projected onto a mirror 130, reflected 131 onto a second mirror 140, and then reflected light 141 is projected onto combiner screen/windscreen/front window 150.

A thin-film-transistor liquid-crystal display (TFT LCD) is a variant of a liquid-crystal display (LCD) that uses thin-film transistor (TFT) technology to improve image qualities such as addressability and contrast. A TFT LCD is an active-matrix LCD, in contrast to passive-matrix LCDs or simple, direct-driven LCDs with a few segments.

As shown, the light 151 (representing content on the HUD 100) is viewable by a viewer's eyebox 160. A viewer's eyebox 160 represents both a left eye 161 and a right eye 162 seeing content.

Applicants have found that having content viewable by both eyes, especially content intended to augment reality, may cause deleterious effects, such as nausea to some viewers, as soon as the optical design strays from perfection. This further adds cost to existing HUD systems because the systems have to include additional systems to ensure that content is not moved or vibrates, because this movement and vibration causes the left eye and the right eye to see different images, thereby leading to the distortion noted above.

### SUMMARY

The following description relates to employing mono-eye head-up display (HUD). Exemplary embodiments may also be directed to any of the system, the method, or an application disclosed herein, and the subsequent implementation in existing vehicular systems, microprocessors, and displays.

Additional features of the invention will be set forth in the description which follows, and in part will be apparent from the description, or may be learned by practice of the invention.

Disclosed herein are systems, methods, and devices for implementing a mono-eye head-up display (HUD), being capable of producing content for only one of a viewer of a combiner of the HUD. The aspects disclosed herein accomplish this through disclosing structures and methods for implementing a backlighting portion of the HUD.

It is to be understood that both the foregoing general description and the following detailed description are exemplary and explanatory and are intended to provide further explanation of the invention as claimed. Other features and aspects will be apparent from the following detailed description, the drawings, and the claims.

### DESCRIPTION OF THE DRAWINGS

The detailed description refers to the following drawings, in which like numerals refer to like items, and in which:
FIG. 1 illustrates an example head-up display (HUD) according to a conventional implementation;
FIGS. 2(a) and (b) illustrate an example implementation according to the concepts disclosed herein;
FIG. 3 illustrates a first embodiment according the example implementations shown in FIGS. 2(a) and (b);
FIG. 4 illustrates a second embodiment according the example implementations shown in FIGS. 2(a) and (b);
FIG. 5 illustrates a first method according the example implementation shown in FIG. 3; and
FIG. 6 illustrates a second method according the example implementation shown in FIG. 4.

### DETAILED DESCRIPTION

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

As explained in the Background section, HUD implementations in the vehicle are becoming more commonplace. However, because the components of the HUD are subject to realization and positioning flaws, displaying content to both eyes of the viewer may lead to a disjointed and awkward appearance.

Disclosed herein are systems, methods, and devices for implementing a mono-eye HUD. Employing the aspects disclosed herein, the above-noted problems associated with variations of view on each eye is effectively obviated. Thus, an implementer of a HUD may achieve a superior display system, while still effectively delivering HUD-based content, such as those in the vehicular space (e.g. augment reality and other vehicle-related content).

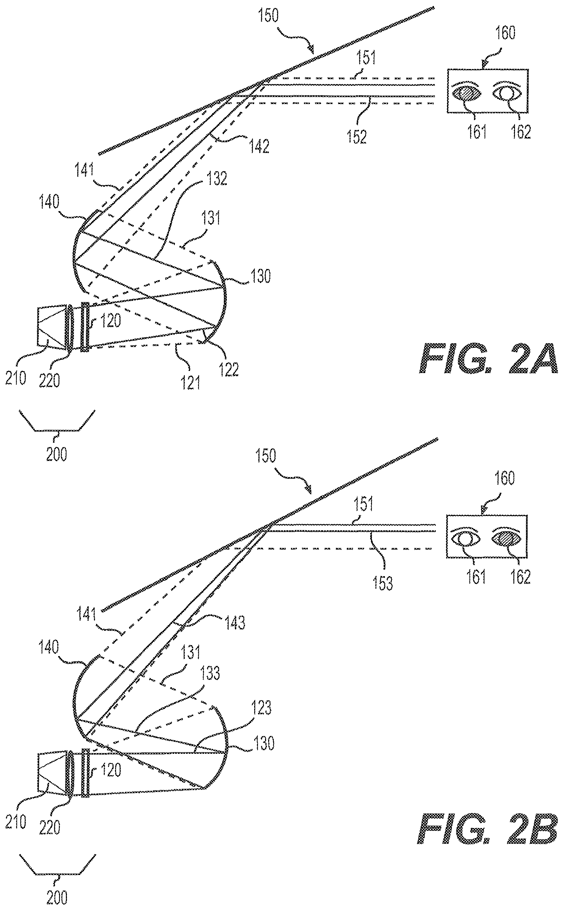

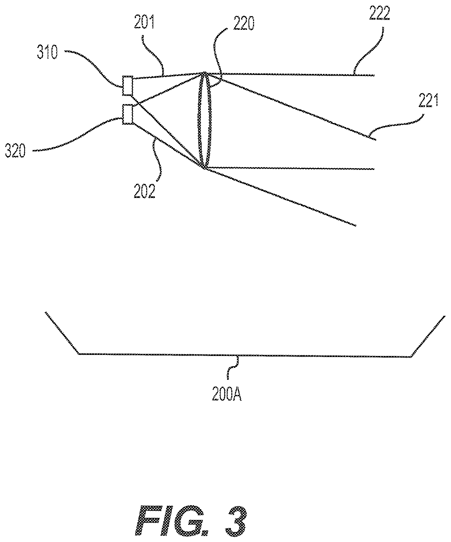

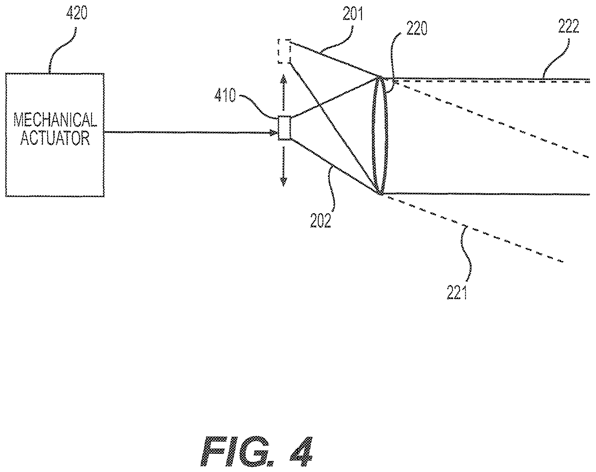

FIGS. 2(a) and (b) illustrate examples of a HUD 200 according to the aspects disclosed herein. The HUD 200s operation is accomplished by either of implementation 200A (shown in FIG. 3) or implementation 200B (shown in FIG. 4).

Referring to FIG. 2(a), the backlight 110 portion is modified, and specifically the lighting portion 210 (which is disposed on one side of a Fresnel lens 220). This modification leads to the differences shown in both FIGS. 2(a) and (b).

Specifically, as shown in FIG. 2(a), the pathway of light 121 is modified to produce new pathway 122, which is propagated to pathway 132, and then 142, and ultimately 152. In this way, light 152 is much smaller than the value of 152 (in overall width). This width/size of 152 may be configured to be oriented at just a left eye 162 or a right eye 161. As shown in FIG. 2(a), the left eye 162 is lighted up. Conversely, and as shown in FIG. 2(b), the right eye is lighted up.

FIG. 2(b) shows another modification, and in the figure shown, light pathways 123, 133, 143, and 153 are produced. In this way, another portion of the eyebox 160 may be projected light (light 153). Thus, using the modification of the aspects shown in FIG. 2(a) and the aspects shown in FIG. 2(b), either a right eye 161 or a left eye 162 may be delivered viewable content from the HUD 200.

FIG. 3 illustrates a first embodiment 200A to implement and achieve the mono-eye HUD 200 shown in FIGS. 2(a) and (b). As shown, the backlight area is exploded. In the conventional HUD 100 shown in FIG. 1, a single LED 110 is implemented. As shown and described below, in implementation 200A there are at least two LEDs implemented.

In FIG. 3, there are two LEDs (310 and 320) provided. Each LED is offset, and thus, propagates a different light (LED 310->light 221 and LED 320->light 222). As such, each light 221 and 222 is capable of producing a smaller portion of content seen by the eyebox 160 (as shown in FIGS. 2(a) and (b)).

In FIG. 3, two LEDs, LED 310 and 320 are shown. However, in other implementations, more than two may be implemented.

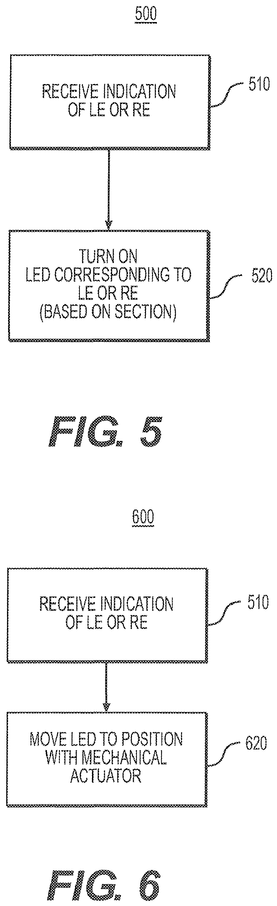

FIG. 5 illustrates a method of implementing embodiment 200A. In operation 510, an indication (for example from a toggle switch, graphical user interface (GUI), or the like may be received), indicating whether to use the left eye or right eye. In other implementations, the switch may be merely from a single eye to both eyes.

Once the indication is received, the appropriate and the corresponding backlight LED (one of LED 310 or 320) is selected (operation 520). Thus, employing the aspects shown in FIG. 3 with the operation described in FIG. 5, allows the implementation of a mono-eye HUD 200.

FIG. 4 illustrates a second embodiment 200B to implement and achieve the mono-eye HUD 200 shown in FIGS. 2(a) and (b). As shown, the backlight area is exploded. Similar to the conventional HUD 100 shown in FIG. 1, a single LED 110 is implemented.

However, instead of providing multiple LEDs (like in FIG. 3), only a single LED 410 is provided. This single LED 410 is provided with a mechanical actuator 420 that moves the LED 410 up and down to generate the various light projection paths shown in FIG. 4 (similarly provided in FIG. 3) to accomplish the implementation of the mono-HUD 200.

The mechanical actuator 420 may be any mechanical part known in the art to move an object from one location to another after receiving an electrical signal instructing the mechanical actuator to do the same.

FIG. 6 illustrates a method 600 for implementing the mono-HUD 200 of FIG. 4. Operation 510 is similar to the one shown in method 500. However, the difference occurs in operation 620. Instead of selectively turning on one (or a subset of LEDs) like operation 520, the mechanical actuator 420 is configured to move the LED 410 into a position to light the left eye, right eye, or both eyes.

Thus, employing either implementation 200A or 200B, the advantages described herein with the disclosed concepts are achieved. Specifically, a HUD implementation may be accomplished delivering content specifically to one eye of an eyebox.

The aspects disclosed herein are described with the framework of a vehicle-based implementation. However, the aspects may be employed in any context in which HUD technology is implemented.

As a person skilled in the art will readily appreciate, the above description is meant as an illustration of implementation of the principles this invention. This description is not intended to limit the scope or application of this invention in that the invention is susceptible to modification, variation and change, without departing from spirit of this invention, as defined in the following claims.

## Claims

1. A mono-eye head-up display(HUD), comprising:
a backlight portion to generate backlighting for a TFT through a Fresnel lens system;
a first curved mirror to reflect light from the TFT;
a combiner to receive the reflected light from the first curved mirror,
wherein the backlight is configurable to offset a source location of the lighting.

2. The HUD according to claim 1, further comprising:
a second curved mirror to reflect light from the first curved mirror, wherein
the combiner is configured to receive reflected light from the first curved mirror propagated to the second curved mirror.

3. The HUD according to claim 1 or claim 2, wherein the combiner is incorporated as a windshield of a vehicle.

4. The HUD according to any one of the preceding claims, wherein the backlight portion further comprises:
a first light emitting diode (LED) and a second light emitting diode (LED),
wherein a placement of the first LED and the second LED is performed so as to generate light viewable by only one eye of a viewer of the combiner.

5. The HUD according to any one of the preceding claims, wherein the backlight portion, further comprises:
one light emitting diode (LED); and
a mechanical actuator connected to the one LED,
wherein the mechanical actuator is configured to move the one LED to a position associated with generating content viewable by only one eye of a viewer of the combiner.
